# FASCICULE DE BREVET EUROPEEN

(11) **EP 3 389 232 B1**
(45) Date de publication et mention de la délivrance du brevet: **10.03.2021**
(21) Numéro de dépôt: 18166569.6
(22) Date de dépôt: 10.04.2018
(51) Int. Cl.: H04L 12/26, H04L 12/58, H04L 12/721, H04L 12/753, H04L 12/24

(54) **PROCÉDÉ DE CONFIGURATION POUR LA DIFFUSION DE MESSAGES**
VERFAHREN ZUR KONFIGURATION VON NACHRICHTENVERBREITUNG
METHOD FOR CONFIGURATION OF MESSAGE DISTRIBUTION

(30) Priorité: 12.04.2017 FR 1753209
(43) Date de publication de la demande: 17.10.2018
(73) Titulaire: Sagemcom Energy & Telecom SAS, 92500 Rueil-Malmaison (FR)
(72) Inventeur: ROTER, Ziv, 92500 Rueil-Malmaison (FR); SERGI, Jérémie, 92500 Rueil-Malmaison (FR)
(74) Mandataire: Cabinet Le Guen Maillet

(56) Documents cités:
- US-A1- 2011 176 416
- US-A1- 2014 126 426
- FREY H ET AL: "Localized minimum spanning tree based multicast routing with energy-efficient guaranteed delivery in ad hoc and sensor networks", WORLD OF WIRELESS, MOBILE AND MULTIMEDIA NETWORKS, 2008. WOWMOM 2008. 2008 INTERNATIONAL SYMPOSIUM ON A, IEEE, PISCATAWAY, NJ, USA, 23 juin 2008 (2008-06-23), pages 1-8, XP031302749, ISBN: 978-1-4244-2099-5

## Description

La présente invention concerne le domaine des réseaux de communications maillés, c'est-à-dire un réseau de communication dans lequel les différents nœuds sont connectés pair à pair. L'invention concerne plus particulièrement le domaine des réseaux de communications par courant porteur en ligne.

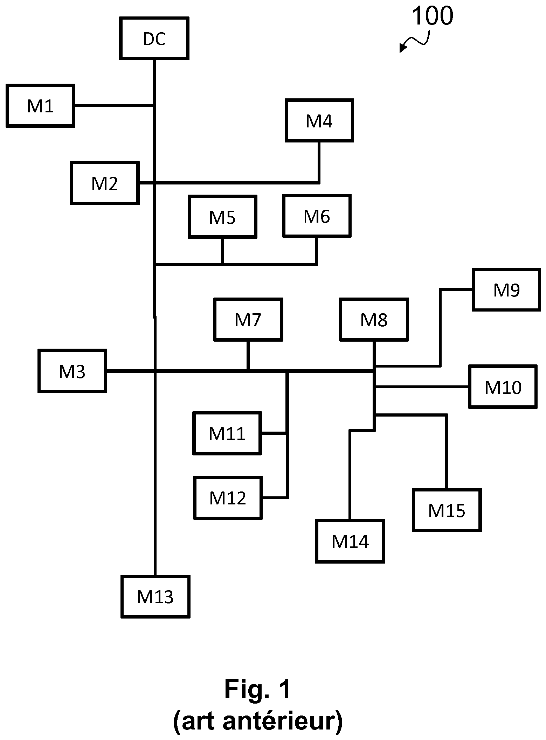

La **Fig. 1** illustre une architecture classique d'un réseau de communication 100 constitué par des dispositifs électroniques DC, M1, M2, M3 ... M15 connectés à un réseau électrique et utilisant une technologie de communication par courant porteur en ligne (ou CPL). Ledit réseau de communication 100 est un réseau de communication maillé car tous les dispositifs électroniques sont connectés pair à pair sans hiérarchie centrale. Tous ces dispositifs électroniques partagent un même média pour émettre ou recevoir des messages (ou trames), le média partagé étant le réseau électrique. Le dispositif électronique DC, ou Concentrateur de Données (« Data Concentrator » en anglais), est classiquement différencié des autres dispositifs électroniques du réseau de communication car comprenant des fonctionnalités différentes des autres nœuds et permettant une connexion du réseau de communication vers un autre réseau de communication amont. Typiquement, le Concentrateur de Données DC comprend une première connexion au réseau électrique et une deuxième connexion vers un autre réseau, par exemple Internet. Les dispositifs électroniques M1, M2, ... M15 sont classiquement des compteurs électriques dits « communicants » (« *smart meters* » en anglais). Chaque dispositif électronique DC, M1, M2, ... M15 du réseau de communication 100 est aussi appelé un nœud du réseau de communication 100. Chaque nœud peut émettre et recevoir des messages. Lorsqu'un nœud émet un message, seuls certains nœuds dits « nœuds voisins », peuvent recevoir ledit message en raison d'une atténuation ou d'interférences présentes sur le réseau électrique. Une communication est possible entre deux nœuds distants non voisins, des nœuds intermédiaires relayant alors le message entre les nœuds distants. Des protocoles de routage existent permettant de définir les nœuds du réseau de communication 100 devant relayer un message lorsqu'un premier nœud envoie un message vers un deuxième nœud. Ces protocoles de routage sont utiles pour définir des communications dites « point-à-point » entre deux nœuds du réseau de communication 100. On parle alors de message de type « message point-à-point » (ou « unicast » en anglais). Ainsi, lorsqu'un nœud reçoit un message de type « point-à-point », le nœud n'émet ensuite ce message que si ce nœud doit relayer le message pour atteindre le nœud de destination, autrement le message est ignoré. Certains messages ont vocation à ne pas être envoyés « point-à-point » entre deux nœuds, mais sont diffusés dans tout le réseau de communication. On parle alors de message de type « message de diffusion » (ou « *broadcast* » en anglais ; ci-après message de type «broadcast»). Lorsqu'un nœud du réseau de communication 100 reçoit un message de type broadcast, ledit nœud émet ensuite ce même message. Chaque nœud recevant puis émettant ensuite le message de type broadcast, ce message est ainsi diffusé dans tout le réseau de communication 100. Ce type de message « broadcast » est par exemple utile lorsque le Concentrateur de Données DC désire envoyer - ou diffuser dans ce cas - un même message à tous les compteurs électriques communicants M1, M2 ... M15. La diffusion de message de type « broadcast » sur le réseau de communication 100, généralement à l'initiative du Concentrateur de Données DC, provoque un grand nombre de retransmissions ou réémissions de message par les compteurs communicants M1, M2, ... M15, chaque compteur communicant M1, M2, ... M15 émettant répétant le message de type « broadcast » reçu. En effet, chaque dispositif électronique, compteurs communicants ou nœud est adapté pour, lorsque ledit dispositif électronique reçoit un message de type « broadcast », émettre ledit message sur le média partagé, c'est-à-dire le répéter. Cela crée une redondance, un même nœud pouvant recevoir le message plusieurs fois. Cette redondance d'émission du message de type « broadcast » pose toutefois problème :
- chaque message de type « broadcast » émis par le Concentrateur de Données DC prenant un certain temps à être diffusé dans le réseau de communication, temps d'autant plus grand que le nombre de nœuds du réseau de communication 100 est important, il est nécessaire d'attendre un certain délai entre deux émissions par le Concentrateur de Données DC de messages de type « broadcast »,
- dans la technologie CPL, l'accès par chaque nœud au média partagé qu'est le réseau électrique est de type « *Écoute d'un Support à Accès Multiple* » (ou « *Carrier Sense Multiple Access* » - CSMA - en anglais) ; ainsi, les nombreuses retransmissions sur le média partagé ralentissent pour chaque nœud l'émission du message, ce qui ralentit in fine la diffusion du message,
- de même, les nombreuses retransmissions sur le média partagé peuvent provoquer des collisions, lesquelles peuvent être à l'origine de pertes de messages et donc empêcher certains nœuds de recevoir un message de type « broadcast » diffusé dans le réseau de communication 100.

Le document US 2014/126426 A1 publié le 8 mai 2014 divulgue un procédé permettant de déterminer une base de données correspondant à une pluralité de nœuds d'un réseau d'ordinateur, la base de données étant construite à partir d'informations de voisinage de chaque nœud collectées par un nœud racine, le nœud racine pouvant alors déterminer un arbre couvrant minimal des nœuds du réseau d'ordinateur. Le nœud racine peut diviser la pluralité de nœuds en deux catégories, la première catégorie correspondant à des nœuds sur lesquels la fonction de routage sera activée, la deuxième catégorie correspondant à des nœuds sur lesquels la fonction de routage sera désactivée. Le nœud racine est adapté pour envoyer des commandes d'activation de la fonction routage sur les nœuds de la première catégorie.

Le document Frey et Al., XP031302749 (ISBN : 978-1-4244-2099-5) divulgue un procédé permettant une diffusion de messages de type « multicast » dans un réseau, le procédé s'appuyant sur la construction d'un arbre couvrant de poids minimal. Le problème technique résolu par ce document est celui de déterminer un chemin commun permettant de diffuser un message multicast en minimisant le nombre de nœuds traversés (« determining best common path »).

Ces deux documents, s'ils concernent des procédés de diffusion de messages dans un réseau de communication maillé, ne divulguent toutefois pas de procédé permettant de pallier la redondance d'émission de messages de type « broadcast ».

Il est indispensable de proposer un procédé permettant d'améliorer la diffusion de messages de type « broadcast » dans un réseau de communication maillé à média partagé.

L'invention prévoit un serveur de configuration pour un réseau de communication maillé adapté pour la génération d'un graphe de réseau par la revendication 1, une méthode correspondante par la revendication 7, un programme d'ordinateur par la revendication 9 et un support d'enregistrement par la revendication 10. Les modes de réalisation préférés sont décrits dans les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement une architecture classique d'un réseau de communication utilisant la technologie de courant porteur en ligne ;
- la **Fig. 2** illustre une architecture d'un réseau de communication utilisant la technologie de courant porteur en ligne et intégrant un serveur de configuration SC, selon un mode de réalisation de l'invention ;
- La **Fig. 3** illustre schématiquement un procédé permettant la configuration de dispositifs électroniques afin de limiter la charge lors de la diffusion d'un message, selon un mode de réalisation de l'invention, le procédé étant exécuté par le serveur de configuration SC ;
- la **Fig. 4** illustre schématiquement l'architecture matérielle d'un serveur de configuration SC adapté pour mettre en œuvre un procédé permettant la configuration de dispositifs électroniques afin de limiter la charge lors de la diffusion d'un message, selon un mode de réalisation de l'invention.

Le principe de l'invention repose sur le fait qu'il n'est pas pertinent pour qu'un message de type « broadcast » soit correctement diffusé au sein d'un réseau de communication que tous les nœuds du réseau de communication répètent le message de type « broadcast ». La présente invention propose un serveur de configuration SC, un procédé et un système permettant d'identifier des nœuds d'un réseau de communication n'étant pas nécessaires à une diffusion complète d'un message de type « broadcast » sur le réseau de communication, ces nœuds étant alors configurés par le serveur de configuration SC pour ne pas émettre ou diffuser un message de type « broadcast » reçu.

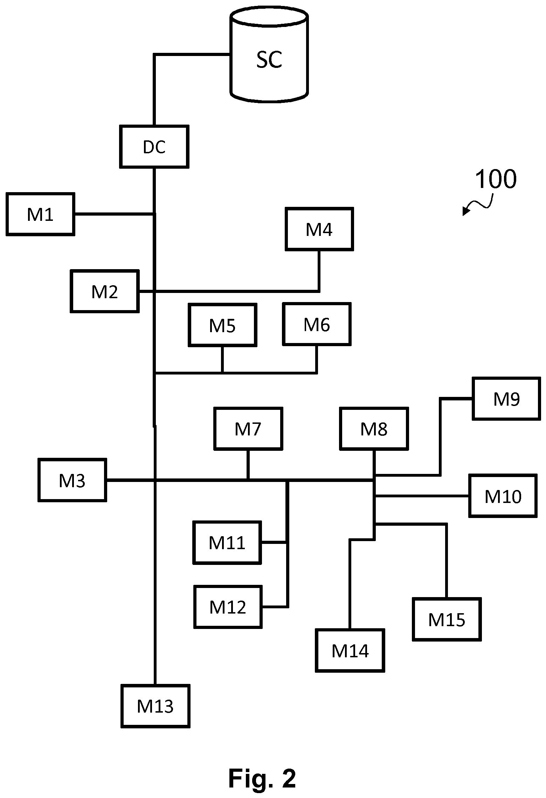

La **Fig. 2** illustre une architecture d'un réseau de communication 100 utilisant la technologie de courant porteur en ligne et intégrant un serveur de configuration SC, selon un mode de réalisation de l'invention. Le serveur de configuration SC est représenté dans la Fig. 2 comme étant directement connecté au Concentrateur de Données DC. Selon un mode de réalisation de l'invention, le Concentrateur de Données DC et le serveur de configuration SC sont un même équipement. Selon un autre mode de réalisation de l'invention, le Concentrateur de Données DC est connecté sur le réseau électrique de façon identique aux compteurs communicants M1, M2 ... M15. Selon un mode de réalisation alternatif de l'invention, les fonctions du Concentrateur de Données DC sont intégrées dans un des compteurs communicants M1, M2 ... M15.

Le serveur de configuration SC est adapté pour recevoir un message en provenance de chaque premier dispositif électronique, le message comprenant un identifiant du premier dispositif électronique, au moins un identifiant d'un deuxième dispositif électronique, dit voisin, et une information sur la qualité d'une liaison du deuxième dispositif électronique vers le premier dispositif électronique. Le premier dispositif électronique et le deuxième dispositif électronique sont ici le Concentrateur de Données DC ou l'un des compteurs communicants M1, M2 ... M15. Chaque dispositif électronique comporte un identifiant, dit identifiant réseau, par exemple une adresse de type MAC (« *Media Access Control* » en anglais). Ainsi, le serveur de configuration SC reçoit, pour chaque nœud du réseau de communication 100, un ou plusieurs messages comportant l'adresse d'un nœud voisin ainsi qu'une information sur la qualité de la liaison du voisin vers le nœud. Possiblement, chaque message peut comprendre des informations concernant plusieurs nœuds voisins. L'information sur la qualité de la liaison est typiquement le LQI (« *Link Quality Indicator* » en anglais) qui retranscrit sur une échelle à 256 valeurs le rapport signal/bruit (« Signal to Noise Ratio » ou SNR en anglais) mesuré pour la liaison.

Le serveur de configuration SC est adapté pour enregistrer dans une mémoire, pour chaque premier dispositif électronique, l'identifiant du premier dispositif électronique et au moins l'information reçue sur la qualité de la liaison en association avec l'identifiant du deuxième dispositif électronique. La mémoire est par exemple la mémoire MEM 402 comme décrit ci-après. Le serveur de configuration SC enregistre, typiquement dans une table de statistiques enregistrée dans une mémoire, les informations précédemment reçues. Le serveur de configuration SC constitue ainsi une table comprenant, pour chaque nœud :
- une identification des nœuds voisins,
- une information sur la qualité de la liaison de chaque voisin vers le nœud.

Cette table peut être mise à jour continuellement. La table peut comprendre un historique des différentes informations reçues. Par exemple, l'information sur la qualité d'une liaison étant un LQI, la table peut comprendre pour chaque nœud voisin une valeur du LQI minimal, du LQI moyen et du LQI maximal sur une certaine période de temps.

Le serveur de configuration SC est adapté pour déterminer, en fonction des informations enregistrées dans la mémoire, un graphe orienté représentant les dispositifs électroniques du réseau de communication, chaque sommet du graphe étant un dispositif électronique et chaque arc du graphe étant une liaison. Ainsi, à partir des informations des nœuds voisins et des informations sur la qualité des liaisons entre les nœuds voisins, le serveur de configuration SC détermine une représentation par un graphe orienté du réseau de communication 100. Chaque sommet du graphe orienté est donc l'un des dispositifs électroniques Concentrateur de Données DC ou compteurs communicants M1, M2 ... M15.

Selon un mode de réalisation de l'invention, chaque arc du graphe se voit attribuer un même poids.

Selon un autre mode de réalisation de l'invention, chaque arc du graphe se voit attribuer un poids inversement proportionnel au nombre de voisins du sommet, c'est-à-dire du nœud, de destination. Ainsi, un premier arc dirigé vers un premier sommet représentant un premier nœud ayant « n » voisins se voit attribuer un poids plus élevé qu'un deuxième arc dirigé vers un deuxième sommet représentant un deuxième nœud ayant plus de « n » voisins.

Le serveur de configuration SC est adapté pour déterminer un arbre couvrant de poids minimal dudit graphe orienté dont la racine est un nœud préalablement désigné du réseau, par exemple le dispositif électronique Concentrateur de Données DC. L'arbre couvrant minimal est déterminé au moyen de tout procédé mathématique connu, par exemple un algorithme de Dijkstra ou un algorithme de Borůvka.

Le serveur de configuration SC est adapté pour sélectionner dans une première liste les dispositifs électroniques correspondants aux sommets de l'arbre couvrant de poids minimal connectés à un unique autre sommet de l'arbre. Le serveur de configuration SC est adapté pour sélectionner les nœuds du réseau de communication 100 qui, dans l'arbre couvrant minimal précédemment déterminé, ne sont connectés qu'à un seul autre nœud. Dit autrement, il s'agit des « feuilles » de l'arbre.

Le serveur de configuration SC est adapté pour envoyer un message à chaque dispositif électronique compris dans la première liste, le message comprenant une commande de configuration pour, lorsque ledit dispositif électronique reçoit un message de type « broadcast », ne pas émettre ledit message sur le média. Dit autrement, le serveur de configuration SC envoie un message de configuration aux nœuds de la première liste afin de faire en sorte que ces nœuds ne répètent plus les messages de type « broadcast ». Ces nœuds étant en extrémité de l'arbre couvrant minimal (« feuilles »), il ne sert à rien qu'ils répètent un message de type « broadcast » une fois reçu. Il est à noter que ce procédé est compatible avec un dispositif électronique ou nœud n'étant pas capable d'interpréter la commande, le message étant alors ignoré. Le procédé et serveur de configuration SC décrit ici sont ainsi compatibles avec un réseau de communication comportant des dispositifs électroniques - Concentrateur de Données DC ou compteurs communicants M1, M2 ... M15 - ne mettant pas œuvre l'invention.

Un dispositif électronique - Concentrateur de Données DC ou compteurs communicants M1, M2 ... M15 - mettant en œuvre l'invention est adapté pour, dans un premier mode de fonctionnement, lorsque ledit dispositif électronique reçoit un message de type « broadcast », émettre ledit message sur le média. Dit autrement, par défaut, un dispositif électronique répète les messages de type » broadcast reçus. Il est à noter que des mécanismes de protection existent pour éviter qu'un même message de type « broadcast » ne soit répété plusieurs fois par un dispositif électronique.

Un dispositif électronique - Concentrateur de Données DC ou compteurs communicants M1, M2 ... M15 - mettant en œuvre l'invention est adapté pour recevoir un message en provenance du serveur de configuration SC comprenant une commande de configuration pour, lorsque ledit dispositif électronique reçoit un message de type « broadcast », ne pas émettre ledit message sur le média et basculer dans un deuxième mode de fonctionnement. Dit autrement, un dispositif électronique ou nœud mettant en œuvre l'invention se distingue d'un dispositif électronique ne mettant pas en œuvre l'invention par l'existence du deuxième mode de fonctionnement dans lequel les messages de type « broadcast » ne sont pas répétés par ledit dispositif électronique. Ainsi, dans le deuxième mode de fonctionnement, lorsqu'un dispositif électronique reçoit un message du premier type, le dispositif électronique n'émet pas ledit message sur le média. Dit autrement, dans le deuxième mode de fonctionnement, un dispositif électronique ne diffuse plus les messages de type « broadcast ».

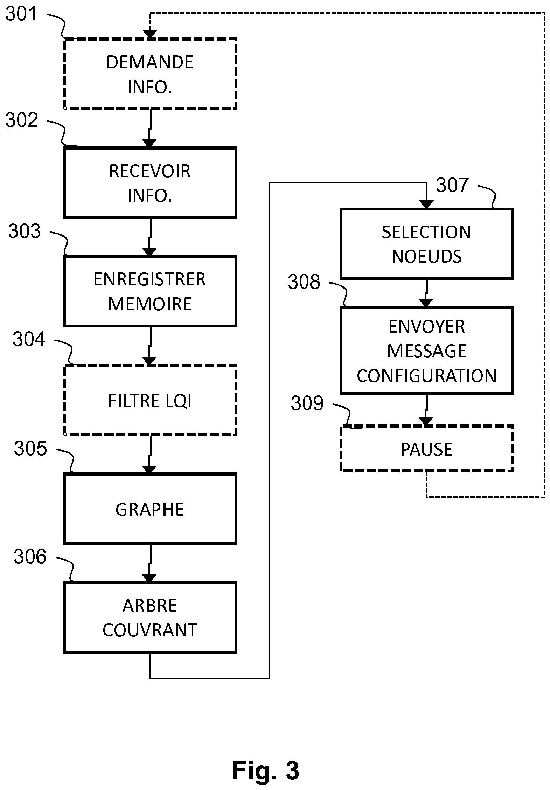

La **Fig. 3** illustre schématiquement un procédé permettant la configuration de dispositifs électroniques M1, M2, ... M15 afin de limiter la charge lors de la diffusion d'un message, selon un mode de réalisation de l'invention, le procédé étant exécuté par le serveur de configuration SC.

Dans une première étape 301, optionnelle, le serveur de configuration SC envoie un message à chaque premier dispositif électronique ou nœud du réseau de communication 100 afin de recevoir en retour un message en provenance du premier dispositif électronique comprenant l'identifiant du premier dispositif électronique, au moins l'identifiant d'un deuxième dispositif électronique et l'information sur la qualité de la liaison du deuxième dispositif électronique vers le premier dispositif électronique. Dit autrement, le serveur de configuration SC envoie une requête à chaque nœud du réseau de communication 100 afin de récupérer en retour des informations sur les voisins de chaque nœud et la qualité des liaisons entre le nœud et ses voisins.

Lors de l'étape suivante 302, le serveur de configuration SC reçoit un message en provenance de chaque premier dispositif électronique, le message comprenant un identifiant du premier dispositif électronique, au moins un identifiant d'un deuxième dispositif électronique, dit voisin, et une information sur la qualité d'une liaison du deuxième dispositif électronique vers le premier dispositif électronique. L'envoi de ce message peut faire suite à l'envoi d'une requête par le serveur de configuration SC lors de l'étape 301. Le message reçu lors de l'étape 302 peut être un message relayé par le Concentrateur de Données DC vers le serveur de configuration SC, le Concentrateur de Données DC pouvant recevoir lui-même des messages comprenant ces informations, pour par exemple des problématiques de routage.

Lors de l'étape suivante 303, le serveur de configuration SC enregistre dans une mémoire, pour chaque premier dispositif électronique ou nœud, l'identifiant du premier dispositif électronique et au moins l'information reçue sur la qualité de la liaison en association avec l'identifiant du deuxième dispositif électronique. Le serveur de configuration SC enregistre, typiquement dans une table de statistiques enregistrée dans une mémoire, les informations précédemment reçues. Le serveur de configuration SC constitue ainsi une table comprenant, pour chaque dispositif électronique ou nœud :
- une identification des nœuds voisins,
- une information sur la qualité de la liaison de chaque voisin vers le nœud.

Cette table peut être mise à jour continuellement. La table peut comprendre un historique des différentes informations reçues. Par exemple, l'information sur la qualité d'une liaison étant un LQI, la table peut comprendre pour chaque nœud voisin une valeur du LQI minimal, du LQI moyen et du LQI maximal sur une certaine période de temps.

L'étape 304 est optionnelle. Elle peut être réalisée après l'étape 303 et avant l'étape 305. Dans l'étape 304, le serveur de configuration SC supprime de la table enregistrée en mémoire les informations concernant les voisins dont les informations sur la qualité de la liaison sont signe d'une mauvaise qualité de la liaison. Dit autrement, si l'information sur la qualité de la liaison est un LQI, alors le serveur de configuration SC supprime de la table enregistrée en mémoire, pour chaque nœud, les informations concernant les voisins dont le LQI attaché à la liaison est inférieur à une valeur prédéterminée. Ainsi, seuls les voisins avec lesquels les liaisons sont de bonnes qualités, c.-à-d. avec un LQI supérieur à la valeur prédéterminée, sont conservés. Dit autrement, seules des liaisons considérées comme fiables sont conservées. Selon un mode de réalisation de l'invention, la suppression est faite sur la base du « LQI moyen » ou du « LQI minimal » ou de tout autre paramètre déterminé en fonction de l'information de qualité.

Selon un mode de réalisation alternatif, l'étape 304 n'est pas réalisée, mais lors de l'étape 303, seules les informations correspondant à une information de qualité respectant un critère, par exemple un LQI supérieur à une valeur prédéterminée, sont enregistrées dans la table enregistrée en mémoire.

Dans l'étape suivante 305, le serveur de configuration SC détermine, en fonction des informations enregistrées dans la mémoire, par exemple la table de statistiques, un graphe orienté représentant les dispositifs électroniques ou nœuds du réseau de communication 100, chaque sommet du graphe étant un dispositif électronique et chaque arc du graphe étant une liaison. Ainsi, à partir des informations des nœuds voisins et des informations sur la qualité des liaisons entre les nœuds voisins, le serveur de configuration SC détermine une représentation par un graphe orienté du réseau de communication 100. Chaque sommet du graphe orienté est donc l'un des dispositifs électroniques Concentrateur de Données DC ou compteurs communicants M1, M2 ... M15.

Selon un mode de réalisation de l'invention, chaque arc du graphe se voit attribuer un même poids.

Selon un autre mode de réalisation de l'invention, chaque arc du graphe se voit attribuer un poids inversement proportionnel au nombre de voisins du sommet, c'est-à-dire du nœud, de destination. Ainsi, un premier arc dirigé vers un premier sommet représentant un premier nœud ayant « n » voisins se voit attribuer un poids plus élevé qu'un deuxième arc dirigé vers un deuxième sommet représentant un deuxième nœud ayant plus de « n » voisins.

Dans l'étape suivante 306, le serveur de configuration SC détermine un arbre couvrant de poids minimal dont la racine est un nœud préalablement désigné du réseau, par exemple le dispositif électronique Concentrateur de Données DC, dudit graphe orienté déterminé lors de l'étape précédente 305. L'arbre couvrant minimal est déterminé au moyen de tout procédé mathématique connu, par exemple un algorithme de Dijkstra ou un algorithme de Borůvka.

Dans l'étape suivante 307, le serveur de configuration SC sélectionne dans une première liste les dispositifs électroniques ou nœuds correspondants aux sommets de l'arbre couvrant de poids minimal connectés à un unique autre sommet de l'arbre. Le serveur de configuration SC sélectionne les nœuds du réseau de communication 100 qui, dans l'arbre couvrant minimal précédemment déterminé, ne sont connectés qu'à un seul autre nœud. Dit autrement, il s'agit des « feuilles » de l'arbre.

Dans une étape suivante 308, le serveur de configuration SC envoie un message à chaque dispositif électronique ou nœud compris dans la première liste, le message comprenant une commande de configuration pour que, lorsque ledit dispositif électronique reçoit un message de type « broadcast », le dispositif électronique n'émette pas ledit message sur le média partagé. Dit autrement, le serveur de configuration SC envoie un message de configuration aux nœuds de la première liste afin de faire en sorte que ces nœuds ne répètent plus - ne diffusent pas - les messages de type « broadcast ». Ces nœuds étant en extrémité de l'arbre couvrant minimal (« feuilles »), il ne sert à rien qu'ils répètent un message de type « broadcast » une fois reçu. Il est à noter que ce procédé est compatible avec un dispositif électronique ou nœud n'étant pas capable d'interpréter la commande, le message étant alors ignoré. Le procédé et serveur de configuration SC décrit ici sont ainsi compatibles avec un réseau de communication comportant des dispositifs électroniques - Concentrateur de Données DC ou compteurs communicants M1, M2 ... M15 - ne mettant pas en œuvre l'invention.

Dans une étape 309, optionnelle, le serveur de configuration SC attend un certain temps prédéterminé avant de possiblement répéter le cycle des étapes 301 à 308.

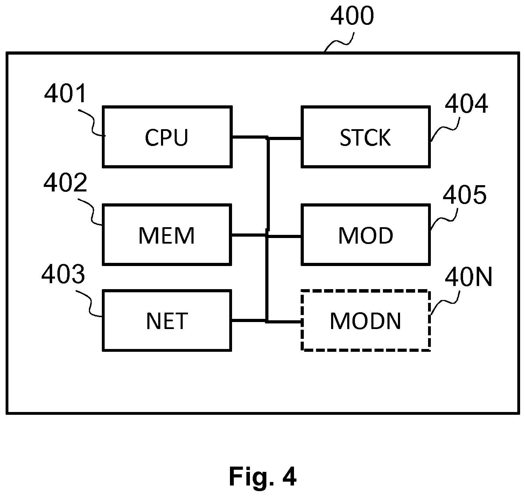

La **Fig. 4** illustre schématiquement l'architecture matérielle d'un serveur, par exemple le serveur de configuration SC, adapté pour mettre en œuvre le procédé de configuration de dispositifs électroniques, par exemple M1, M2, ... connectés à un média partagé d'un réseau de communication maillé permettant de réduire la charge du réseau de communication lors de la diffusion d'un message. Le serveur de configuration SC comporte, reliés par un bus de communication : un processeur ou CPU (« *Central Processing Unit* » en anglais) 401 ; une mémoire MEM 402 de type RAM (« *Random Access Memory* » en anglais) et/ou ROM (« *Read Only Memory* » en anglais), un module réseau NET 403, un module de stockage STCK 404 de type stockage interne et possiblement d'autres modules 405 à 40N de différentes natures. Le module de stockage STCK 404 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 401 peut enregistrer des données, ou informations, dans la mémoire MEM 402 ou dans le module de stockage STCK 404. Le processeur CPU 401 peut lire des données enregistrées dans la mémoire MEM 402 ou dans le module de stockage STCK 404. Ces données peuvent correspondre à des paramètres de configuration du serveur de configuration SC ou à des informations reçues par exemple dans un message reçu par le module réseau NET 403, ou via un autre module de communication 40N. Le module réseau NET 403 permet la connexion du serveur de configuration SC à un ou plusieurs réseaux de communication, par exemple via un média de type réseau électrique. Le module réseau NET 403 peut permettre la connexion du serveur de configuration SC à un dispositif électronique tel le Concentrateur de Données DC, par exemple via une technologie de type Ethernet. Le module réseau 403 permet au serveur de configuration SC d'envoyer, respectivement de recevoir, des messages à destination de, respectivement en provenance de, un ou plusieurs dispositifs électroniques, par exemple les dispositifs électroniques M1, M2, ... ; les messages pouvant typiquement transiter via le Concentrateur de Données DC.

Le processeur CPU 401 est capable d'exécuter des instructions chargées dans la mémoire MEM 402, par exemple à partir du module de stockage STCK 404 ou d'un réseau de communication via le module réseau NET 403, ou d'un autre module de communication 40N par exemple. Lorsque le serveur de configuration SC est mis sous tension, le processeur CPU 401 est capable de lire de la mémoire MEM 402 des instructions et de les exécuter. Ces instructions forment un programme d'ordinateur causant la mise en œuvre, par le processeur CPU 401, de tout ou partie des procédés et étapes décrits ci-avant, particulièrement dans la description de la Fig. 3. Ainsi, tout ou partie des procédés et étapes décrits ci-avant peuvent être implémentés sous forme logicielle par exécution d'un ensemble d'instructions par une machine programmable, telle qu'un DSP (« *Digital Signal Processor* » en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit* » en anglais). Les fonctions du serveur de configuration SC peuvent être intégrées au Concentrateur de Données DC.

## Revendications

1. Serveur de configuration, SC, pour un réseau de communication (100) maillé comprenant une pluralité de dispositifs électroniques (M1, M2, ... M15) connectés à un média partagé, chaque dispositif électronique étant adapté pour, lorsque ledit dispositif électronique reçoit un message d'un premier type, émettre ledit message sur le média, le serveur étant **caractérisé en ce qu'**il est adapté pour :
- recevoir un message en provenance de chaque premier dispositif électronique, le message comprenant un identifiant du premier dispositif électronique, au moins un identifiant d'un deuxième dispositif électronique, dit voisin, et une information sur la qualité d'une liaison du deuxième dispositif électronique vers le premier dispositif électronique,
- pour chaque premier dispositif électronique, enregistrer dans une mémoire l'identifiant du premier dispositif électronique et au moins l'information reçue sur la qualité de la liaison en association avec l'identifiant du deuxième dispositif électronique,
- déterminer, en fonction des informations enregistrées dans la mémoire, un graphe orienté représentant les dispositifs électroniques du réseau de communication, chaque sommet du graphe étant un dispositif électronique et chaque arc du graphe étant une liaison,
- déterminer un arbre couvrant de poids minimal dudit graphe orienté,
- sélectionner dans une première liste les dispositifs électroniques correspondants aux sommets de l'arbre couvrant de poids minimal connectés à un unique autre sommet de l'arbre,
- pour chaque dispositif électronique compris dans la première liste, envoyer un message comprenant une commande de configuration pour, lorsque ledit dispositif électronique reçoit un message d'un premier type, ne pas émettre ledit message sur le média.

2. Serveur de configuration selon la revendication précédente, chaque arc du graphe étant une liaison vers un dispositif électronique, un poids de l'arc étant déterminé inversement proportionnel au nombre de voisins dudit dispositif électronique.

3. Serveur de configuration selon l'une des revendications précédentes, l'information sur la qualité de la liaison du deuxième dispositif électronique vers le premier dispositif électronique étant un indicateur de qualité, le serveur de configuration étant adapté pour, si l'indicateur de qualité est inférieur à une valeur prédéterminée, ne pas enregistrer dans la mémoire l'information reçue sur la qualité de la liaison en association avec l'identifiant du deuxième dispositif électronique.

4. Serveur de configuration selon l'une des revendications précédentes, le serveur étant en outre adapté pour envoyer préalablement un message à chaque premier dispositif électronique afin de recevoir en retour le message en provenance du premier dispositif électronique comprenant l'identifiant du premier dispositif électronique, au moins l'identifiant d'un deuxième dispositif électronique et l'information sur la qualité de la liaison du deuxième dispositif électronique vers le premier dispositif électronique.

5. Serveur de configuration selon l'une des revendications précédentes, le média partagé étant un réseau électrique et chaque dispositif électronique utilisant une technologie de type courant porteur en ligne pour se connecter au réseau de communication.

6. Serveur de configuration selon l'une des revendications précédentes, chaque dispositif électronique étant conforme à la norme third Generation Power Line Communication, G3-PLC.

7. Procédé de configuration de dispositifs électroniques connectés à un média partagé d'un réseau de communication maillé, chaque dispositif électronique étant adapté pour, lorsque ledit dispositif électronique reçoit un message d'un premier type, émettre ledit message sur le média, le procédé étant exécuté par un serveur de configuration et étant **caractérisé en ce qu'**il comprend les étapes de :
- recevoir (302) un message en provenance de chaque premier dispositif électronique, le message comprenant un identifiant du premier dispositif électronique, au moins un identifiant d'un deuxième dispositif électronique et une information sur la qualité d'une liaison du deuxième dispositif électronique vers le premier dispositif électronique,
- pour chaque premier dispositif électronique, enregistrer (303) dans une mémoire l'identifiant du premier dispositif électronique et au moins l'information reçue sur la qualité de la liaison en association avec l'identifiant du deuxième dispositif électronique,
- déterminer (305), en fonction des informations enregistrées dans la mémoire, un graphe orienté représentant les dispositifs électroniques du réseau de communication, chaque sommet du graphe étant un dispositif électronique et chaque arc du graphe étant une liaison,
- déterminer (306) un arbre couvrant de poids minimal dudit graphe orienté,
- sélectionner (307) dans une première liste les dispositifs électroniques correspondants aux sommets de l'arbre couvrant de poids minimal connectés à un unique autre sommet de l'arbre,
- pour chaque dispositif électronique compris dans la première liste, envoyer (308) un message comprenant une commande de configuration pour, lorsque ledit dispositif électronique reçoit un message d'un premier type, ne pas émettre ledit message sur le média.

8. Système pour un réseau de communication (100) maillé comprenant une pluralité de dispositifs électroniques connectés à un média partagé, chaque dispositif électronique étant adapté pour, lorsque ledit dispositif électronique reçoit un message d'un premier type, émettre ledit message sur le média, le système étant **caractérisé en ce qu'**il comprend :
- un serveur de configuration (SC) selon l'une des revendications 1 à 6, et,
- au moins un dispositif électronique (M1, M2, ... M15) adapté pour :
- dans un premier mode de fonctionnement, lorsque ledit dispositif électronique reçoit un message d'un premier type, émettre ledit message sur le média,
- recevoir un message comprenant une commande de configuration pour, lorsque ledit dispositif électronique reçoit un message du premier type, ne pas émettre ledit message sur le média et basculer dans un deuxième mode de fonctionnement, et,
dans le deuxième mode de fonctionnement, lorsque ledit dispositif électronique reçoit un message du premier type, ne pas émettre ledit message sur le média.

9. Programme d'ordinateur, **caractérisé en ce qu'**il comprend des instructions pour mettre en œuvre, par un processeur (401), le procédé de configuration de dispositifs électroniques connectés à un média partagé d'un réseau de communication maillé, selon la revendication 7, lorsque le programme d'ordinateur est exécuté par le processeur.

10. Support d'enregistrement **caractérisé en ce qu'**il stocke le programme d'ordinateur selon la revendication précédente.

## Patentansprüche

1. SC-Konfigurationsserver für ein vermaschtes Kommunikationsnetzwerk (100), das eine Vielzahl elektronischer Vorrichtungen (M1, M2, ... M15) enthält, die mit einem gemeinsam genutzten Medium verbunden sind, wobei jede elektronische Vorrichtung geeignet ist, wenn die elektronische Vorrichtung eine Nachricht eines ersten Typs empfängt, die Nachricht auf dem Medium zu senden, wobei der Server **dadurch gekennzeichnet ist, dass** er geeignet ist:
- eine Nachricht von jeder ersten elektronischen Vorrichtung zu empfangen, wobei die Nachricht eine Kennung der ersten elektronischen Vorrichtung, mindestens eine Kennung einer so genannten benachbarten zweiten elektronischen Vorrichtung und eine Information über die Qualität einer Verbindung der zweiten elektronischen Vorrichtung zur ersten elektronischen Vorrichtung enthält,
- in einem Speicher für jede erste elektronische Vorrichtung die Kennung der ersten elektronischen Vorrichtung und mindestens die empfangene Information über die Qualität der Verbindung zusammen mit der Kennung der zweiten elektronischen Vorrichtung zu speichern,
- abhängig von den im Speicher gespeicherten Informationen einen gerichteten Graphen zu bestimmen, der die elektronischen Vorrichtungen des Kommunikationsnetzwerks darstellt, wobei jeder Scheitel des Graphen eine elektronische Vorrichtung und jeder Bogen des Graphen eine Verbindung ist,
- einen Spannbaum minimaler Gewichtung des gerichteten Graphen zu bestimmen,
- aus einer ersten Liste die elektronischen Vorrichtungen entsprechend den Scheiteln des Spannbaums minimaler Gewichtung auszuwählen, die mit einem einzigen anderen Scheitel des Baums verbunden sind,
- für jede in der ersten Liste enthaltene elektronische Vorrichtung eine Nachricht zu senden, die einen Konfigurationsbefehl enthält, um, wenn die elektronische Vorrichtung eine Nachricht eines ersten Typs empfängt, die Nachricht nicht auf dem Medium zu senden.

2. Konfigurationsserver nach dem vorhergehenden Anspruch, wobei jeder Bogen des Graphen eine Verbindung zu einer elektronischen Vorrichtung ist, wobei ein Gewicht des Bogens umgekehrt proportional zur Anzahl von Nachbarn der elektronischen Vorrichtung bestimmt wird.

3. Konfigurationsserver nach einem der vorhergehenden Ansprüche, wobei die Information über die Qualität der Verbindung der zweiten elektronischen Vorrichtung zur ersten elektronischen Vorrichtung ein Qualitätsindikator ist, wobei der Konfigurationsserver geeignet ist, um, wenn der Qualitätsindikator niedriger als ein vorbestimmter Wert ist, die empfangene Information über die Qualität der Verbindung zusammen mit der Kennung der zweiten elektronischen Vorrichtung nicht im Speicher zu speichern.

4. Konfigurationsserver nach einem der vorhergehenden Ansprüche, wobei der Server außerdem geeignet ist, vorab eine Nachricht an jede erste elektronische Vorrichtung zu senden, um als Antwort die Nachricht von der ersten elektronischen Vorrichtung zu empfangen, die die Kennung der ersten elektronischen Vorrichtung, mindestens die Kennung einer zweiten elektronischen Vorrichtung und die Information über die Qualität der Verbindung der zweiten elektronischen Vorrichtung zur ersten elektronischen Vorrichtung enthält.

5. Konfigurationsserver nach einem der vorhergehenden Ansprüche, wobei das gemeinsam genutzte Medium ein elektrisches Netzwerk ist und jede elektronische Vorrichtung eine Technologie des Typs Powerline-Kommunikation verwendet, um sich mit dem Kommunikationsnetzwerk zu verbinden.

6. Konfigurationsserver nach einem der vorhergehenden Ansprüche, wobei jede elektronische Vorrichtung der Norm Third Generation Powerline Communication, G3-PLC, entspricht.

7. Verfahren zur Konfiguration von elektronischen Vorrichtungen, die mit einem gemeinsam genutzten Medium eines vermaschten Kommunikationsnetzwerks verbunden sind, wobei jede elektronische Vorrichtung geeignet ist, um, wenn die elektronische Vorrichtung eine Nachricht eines ersten Typs empfängt, die Nachricht auf dem Medium zu senden, wobei das Verfahren von einem Konfigurationsserver ausgeführt wird und **dadurch gekennzeichnet ist, dass** es die folgenden Schritte enthält:
- Empfang (302) einer Nachricht von jeder ersten elektronischen Vorrichtung, wobei die Nachricht eine Kennung der ersten elektronischen Vorrichtung, mindestens eine Kennung einer zweiten elektronischen Vorrichtung und eine Information über die Qualität einer Verbindung der zweiten elektronischen Vorrichtung zur ersten elektronischen Vorrichtung enthält,
- für jede erste elektronische Vorrichtung, Speichern (303) in einem Speicher der Kennung der ersten elektronischen Vorrichtung und mindestens der empfangenen Information über die Qualität der Verbindung zusammen mit der Kennung der zweiten elektronischen Vorrichtung,
- Bestimmung (305), abhängig von den im Speicher gespeicherten Informationen, eines gerichteten Graphen, der die elektronischen Vorrichtungen des Kommunikationsnetzwerks darstellt, wobei jeder Scheitel des Graphen eine elektronische Vorrichtung und jeder Bogen des Graphen eine Verbindung ist,
- Bestimmung (306) eines Spannbaums minimaler Gewichtung des gerichteten Graphen,
- Auswahl (307) in einer ersten Liste der elektronischen Vorrichtungen, die den Scheiteln des Spannbaums minimaler Gewichtung entsprechen, die mit einem einzigen anderen Scheitel des Baums verbunden sind,
- für jede in der ersten Liste enthaltene elektronische Vorrichtung, Senden (308) einer einen Konfigurationsbefehl enthaltenden Nachricht, um, wenn die elektronische Vorrichtung eine Nachricht eines ersten Typs empfängt, die Nachricht nicht auf dem Medium zu senden.

8. System für ein vermaschtes Kommunikationsnetzwerk (100), das eine Vielzahl elektronischer Vorrichtungen enthält, die mit einem gemeinsam genutzten Medium verbunden sind, wobei jede elektronische Vorrichtung geeignet ist, um, wenn die elektronische Vorrichtung eine Nachricht eines ersten Typs empfängt, die Nachricht auf dem Medium zu senden, wobei das System **dadurch gekennzeichnet ist, dass** es enthält:
- einen Konfigurationsserver (SC) nach einem der Ansprüche 1 bis 6, und
- mindestens eine elektronische Vorrichtung (M1, M2, ... M15), die geeignet ist, um:
- in einer ersten Betriebsart, wenn die elektronische Vorrichtung eine Nachricht eines ersten Typs empfängt, die Nachricht auf dem Medium zu senden,
- eine Nachricht zu empfangen, die einen Konfigurationsbefehl enthält, um, wenn die elektronische Vorrichtung eine Nachricht des ersten Typs empfängt, die Nachricht nicht auf dem Medium zu senden und in eine zweite Betriebsart umzuschalten, und
in der zweiten Betriebsart, wenn die elektronische Vorrichtung eine Nachricht des ersten Typs empfängt, die Nachricht nicht auf dem Medium zu senden.

9. Computerprogramm, **dadurch gekennzeichnet, dass** es Anweisungen enthält, um durch einen Prozessor (401) das Konfigurationsverfahren von elektronischen Vorrichtungen durchzuführen, die mit einem gemeinsam genutzten Medium eines vermaschten Kommunikationsnetzwerks nach Anspruch 7 verbunden sind, wenn das Computerprogramm vom Prozessor ausgeführt wird.

10. Speicherträger, **dadurch gekennzeichnet, dass** er das Computerprogramm nach dem vorhergehenden Anspruch speichert.

## Claims

1. Configuration server, SC, for a mesh communication network (100) comprising a plurality of electronic devices (M1, M2, ... M15) connected to a shared medium, each electronic device being adapted, when said electronic device receives a message of a first type, to transmit said message over the medium, the server being **characterized in that** it is adapted to:
- receive a message originating from each first electronic device, the message comprising an identifier of the first electronic device, at least one identifier of a second electronic device, called neighbouring device, and information on the quality of a link of the second electronic device to the first electronic device,
- for each first electronic device, store in a memory the identifier of the first electronic device and at least the received information on the quality of the link in association with the identifier of the second electronic device,
- determine, depending on the information stored in the memory, a directed graph representing the electronic devices of the communication network, each vertex of the graph being an electronic device and each edge of the graph being a link,
- determine a minimum weight spanning tree of said directed graph,
- select from a first list the electronic devices corresponding to the vertices of the minimum weight spanning tree which are connected to one single other vertex of the tree,
- for each electronic device comprised in the first list, send a message comprising a configuration command to, when said electronic device receives a message of a first type, not transmit said message over the medium.

2. Configuration server according to the preceding claim, each edge of the graph being a link to an electronic device, the weight of the edge being determined as inversely proportional to the number of neighbours of said electronic device.

3. Configuration server according to either of the preceding claims, the information on the quality of the link of the second electronic device to the first electronic device being a quality indicator, the configuration server being adapted, if the quality indicator is lower than a predefined value, not to store in the memory the received information on the quality of the link in association with the identifier of the second electronic device.

4. Configuration server according to one of the preceding claims, the server being furthermore adapted to send in advance a message to each first electronic device in order to receive in return the message originating from the first electronic device comprising the identifier of the first electronic device, at least the identifier of a second electronic device and the information on the quality of the link of the second electronic device to the first electronic device.

5. Configuration server according to one of the preceding claims, the shared medium being an electrical network and each electronic device using a technology of power-line communication type to connect to the communication network.

6. Configuration server according to one of the preceding claims, each electronic device being in accordance with the Third Generation Power Line Communication, G3-PLC, standard.

7. Method for configuring electronic devices connected to a shared medium of a mesh communication network, each electronic device being adapted, when said electronic device receives a message of a first type, to transmit said message over the medium, the method being executed by a configuration server and being **characterized in that** it comprises the steps of:
- receiving (302) a message originating from each first electronic device, the message comprising an identifier of the first electronic device, at least one identifier of a second electronic device and information on the quality of a link of the second electronic device to the first electronic device,
- for each first electronic device, storing (303) in a memory the identifier of the first electronic device and at least the received information on the quality of the link in association with the identifier of the second electronic device,
- determining (305), depending on the information stored in the memory, a directed graph representing the electronic devices of the communication network, each vertex of the graph being an electronic device and each edge of the graph being a link,
- determining (306) a minimum weight spanning tree of said directed graph,
- selecting (307) from a first list the electronic devices corresponding to the vertices of the minimum weight spanning tree which are connected to one single other vertex of the tree,
- for each electronic device comprised in the first list, sending (308) a message comprising a configuration command to, when said electronic device receives a message of a first type, not transmit said message over the medium.

8. System for a mesh communication network (100) comprising a plurality of electronic devices connected to a shared medium, each electronic device being adapted, when said electronic device receives a message of a first type, to transmit said message over the medium, the system being **characterized in that** it comprises:
- a configuration server (SC) according to one of Claims 1 to 6, and
- at least one electronic device (M1, M2, ... M15) adapted to:
- in a first operating mode, when said electronic device receives a message of a first type, transmit said message over the medium,
- receive a message comprising a configuration command to, when said electronic device receives a message of the first type, not transmit said message over the medium and switch into a second operating mode, and
in the second operating mode, when said electronic device receives a message of the first type, not transmit said message over the medium.

9. Computer program, **characterized in that** it comprises instructions for implementing, by means of a processor (401), the method for configuring electronic devices connected to a shared medium of a mesh communication network, according to Claim 7, when the computer program is executed by the processor.

10. Storage medium, **characterized in that** it stores the computer program according to the preceding claim.
